# EUROPEAN PATENT SPECIFICATION

(11) **EP 3 156 467 B1**
(45) Date of publication and mention of the grant of the patent: **21.09.2022**
(21) Application number: 15806551.6
(22) Date of filing: 09.06.2015
(51) Int. Cl.: C09J 101/00, C09J 105/00, C09J 11/06, C09J 189/00, D04H 1/64, C03C 25/32, C08K 5/07, C08L 3/02, C08L 5/00, C08L 89/00

(54) **AQUEOUS BINDER COMPOSITION HAVING RECYCLABLE PROCESS WATER, AND METHOD FOR BINDING FIBROUS MATERIAL BY USING SAME**
WÄSSRIGE BINDEMITTELZUSAMMENSETZUNG MIT RECYCELBAREM PROZESSWASSER UND VERFAHREN ZUR BINDUNG VON FASERIGEM MATERIAL DAMIT
COMPOSITION AQUEUSE DE LIANT À EAU DE PROCÉDÉ RECYCLABLE, ET PROCÉDÉ POUR LIER UN MATÉRIAU FIBREUX L'UTILISANT

(30) Priority: 10.06.2014 KR 20140070339
(43) Date of publication of application: 19.04.2017
(73) Proprietor: Kcc Corporation, Seoul 137-703 (KR)
(72) Inventor: HONG, Seung Min, Hwaseong-si Gyeonggi-do445-723 (KR); KIM, Yong Joo, Yongin-si Gyeonggi-do 448-130 (KR); LEE, Song Yi, Yongin-si Gyeonggi-do 446-720 (KR)
(74) Representative: Denjean, Eric
(86) International application number: PCT/KR2015/005740
(87) International publication number: WO 2015/190788

(56) References cited:
- EP-A1- 2 395 035
- EP-A1- 2 730 631
- EP-A2- 0 284 186
- WO-A1-2016/186459
- JP-A- 2010 502 773
- KR-A- 20040 049 315
- KR-A- 20140 017 672
- US-A1- 2010 087 571
- US-A1- 2011 263 757
- US-A1- 2011 263 757

## Description

### [Technical Field]

The present invention relates to an aqueous binder composition capable of recycling process water and method for binding fibrous materials by using the same, and more specifically, relates to an aqueous binder composition comprising one or more reducing sugars, one or more amino acids and one or more aldehyde compounds with 1% or less of minimum inhibitory concentration (MIC) as claimed in claim 1 and a method for binding fibrous materials by using the same as claimed in claim 6. The binder composition of the present invention provides equal or better physical properties with lower price compared to traditional phenol formaldehyde resin (PFR), does not include or release toxic materials such as formaldehyde or phenol, may decrease bad odor which is a weak point of traditional PFR during manufacturing and remarkably enhances the mechanical properties-such as water resistance, tensile strength and hardness-and dust rate of the manufactured product, and is economical since process water can be recycled without putrefaction which occurs during the manufacturing process of binding of fibrous materials since the binder solution has preservative ability.

### [Background Art]

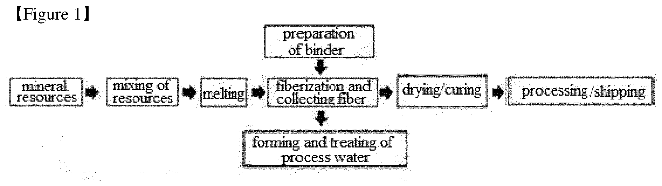

The manufacturing process for glass wool and rock wool comprising fiberizing mineral and refining it for commercialization is briefly shown in Fig. 1.

In other words, the mixture of mineral resources is melted and fiberized in high temperature, and fiber is collected as binders are applied. Especially, during the process of applying binders and collecting fiber, approximately 15-35% of the binder solution flows in the sides or floor of the facilities and it is washed by using cleaning water. Other manufacturing facilities may also be contaminated by mineral fibers and the mineral fibers are also eliminated by using cleaning water through the same method. The cleaning water which comprises binder component, formed during the manufacturing process, is referred as "process water" through the present description. The fibrous materials in the process water are eliminated by filter, collected in the collecting tank, and mixed proportionally again in the binder solution, or are decomposed by using physical, chemical, or biological method under the concentration wherein putrefaction of the contained organic compound may not occur. In the former case, there is an advantage of recycling the loss of binder component, but there is still a problem of managing to inhibit the putrefaction remains.

PFR has been widely and traditionally used as a binder for the adhesion of fibrous materials since it is inexpensive but has outstanding physical properties. Using PFR as a binder has the advantage of being capable of recycling without problems regarding putrefaction since the process water formed comprises toxic materials such as phenol or formaldehyde. However, PFR releases formaldehyde, a carcinogenic agent, not only during the manufacturing process but even after application, and phenol is also a toxic material that may cause harmful effects as the unreacted reacting material is continuously exposed to the external environment.

Korean Registered Patent No. 240044, US Laid-open Patent Publication No. 2012-0133073, Korean Laid-open Patent Publication No. 1999-0037115, Korean Laid-open Patent Publication No. 2008-0049012 and Korean Laid-open Patent Publication No. 2010-0065273 disclose compositions wherein eco-friendly materials derived from natural sources are used as binder components. However, technologies disclosed in the references are poorer than the traditional PFR resin, and as there is almost no preservative effect in binder solution itself. Therefore, organic binder components of the process water should be decomposed, or recycled by using separate special facilities and processes.

### [Detailed Description]

### [Technical Purpose]

The purpose of the present invention is to provide aqueous binder composition and method for binding fibrous materials by using the same which has equal or better physical properties with lower price compared to traditional phenol formaldehyde resin (PFR) regarding adhesion of fibrous materials such as glass wool and rock wool, does not include or release toxic materials such as formaldehyde or phenol, and may decrease bad odor which is a weak point of traditional PFR during manufacturing, is economical since process water formed during the process of binding fibrous materials can be recycled without putrefaction by microorganisms, and remarkably enhances the mechanical properties-such as water resistance, tensile strength and hardness-and dust rate of the manufactured product.

### [Technical Solution]

Thus, the present invention provides aqueous heat-curable binder composition comprising one or more reducing sugars, one or more amino acids, and one or more aldehyde compounds with 1% or less of minimum inhibitory concentration (MIC) as claimed in claim 1.

In another aspect, the present invention provides a method for binding fibrous materials comprising the above heat-curable binder composition to the fibrous materials; and heat-curing the spray binder composition as claimed in claim 6.

### [Advantageous Effects]

The fibrous material products bound by the binder composition of the present invention feature equal or better physical properties with lower price compared to traditional phenol formaldehyde resin, do not include or release toxic materials such as formaldehyde or phenol, and may decrease bad odor which is a weak point of traditional PFR during manufacturing. Moreover, unlike traditional eco-friendly binders, binder solution has preservative effectiveness, being capable of recycling process water formed during the process of binding fibrous materials without putrefaction by microorganisms, and remarkably enhances the mechanical properties-such as water resistance, tensile strength and hardness-and dust rate of the manufactured product.

### [Brief Description of the Figures]

Figure 1 briefly shows the manufacturing process of fiberizing mineral and refining it for the purpose of commercialization.

### [Best Mode for Invention]

Hereinafter, the present invention will be described in more detail.

Maillard (Louis-Camille Maillard), a French chemist, explained the nonenzymatic browning reaction between sugars and amino acids existing in food at high temperatures (also referred as "Maillard reaction") in 1912 ("Action of Amino Acids on Sugards. Formation of Melanoidins in a Methodical Way," Compt. Rend., 154:66). Moreover, in 1953, the American chemist John E. Hodge described the procedure of a reacting mechanism in detail in a research article ("Chemistry of Browning Reactions in Model Systems," J. Agric. Food Chem., 1953, 1, 928-943). In other words, sugars in forms of aldose with reactive aldehyde group react with amino acids at high temperatures, and intermediate of N-substituted glycosyl amine is formed. Through the rearrangement of amadori, reactions are conducted in various pathways, and various volatile organic compounds with low molecular weight are decomposed. Thus, brown nitrogen-containing polymers called Melanoidins and their copolymers are formed. Specifically, in 1966, Lloyd W. Rooney and Ali Salem reported that reducing sugars such as glucose or xylose actively react with amino acids such as methionine, tryptophan, phenylalanine, lysine, histidine, glycine, alanine, valine, leucine and isoleucine when determining how much the Maillard reaction has proceeded by using the method of measuring color change and the amount of decomposed organic compound of low molecular weight (formaldehyde, acetealdehyde, acetone, isobutylaldehyde, isovaleraldehyde) wherein reducing sugars and amino acids aqueous solution were reacted at high temperature (for 12 hours at 95°C in the state of aqueous solution, 30 minutes at 268°C after being mixed in starch) in their Ph.D. thesis ("Studies of the Carbonyl Compounds Produced by Sugar-Amino Acid Reactions. I. Model Systems, Ph. D Thesis, the Graduate Faculty of Kansas State University, 1966, No. 559, 539-550).

Maillard reaction has been widely applied in the fields of enhancing food aroma and the taste of food, and also was well known for these traits. However, Maillard reaction has not been interpreted thoroughly in the field of binders. For example, brown nitrogen-containing polymers called Melanoidins, formed by reaction between sugars and amino acids at a high temperature can easily be obtained by heating molasses which is widely used as an organic bonding agent at a high temperature. Molasses, a by-product obtained when purifying sugars, is a mixture in which sugars comprising reducing sugars in approximately 50% in mass ratio and 5-10% of compounds (such as protein, kinds of amino acids and kinds of oligomers) comprising nitrogen atoms. At a high temperature, reducing sugars and protein/amino acids in molasses react to form Melanoidins.

US Patent No. 3,961,081 uses molasses as a binder for livestock feed. Herein, it is disclosed that a hard powder comprising Melanoidins can be provided by eliminating condensation product with applying vacuum.

US Patent No. 5,416,139 uses molasses as a binder for manufacturing construction structural materials. Herein, it discloses that the composition comprising molasses is emitted at a high temperature of 150-180°C to manufacture cured complex materials comprising Melanoidins.

Korean Patent Application No. 1987-0005710 discloses using mixture of a part of phenol formaldehyde resin (PFR) or amino formaldehyde resin, and sugars (such as molasses, dextrin, glucose, fructose and sucrose) and lignosulfonate may decrease the released amount of formaldehyde of amino and phenol resin. Herein, the composition comprising reducing sugars and a component comprising amino groups may form Melanoidins at a high temperature.

Korean Laid-Open Patent No. 10-2008-0049012 discloses that ammonium salt of polycarboxylic acid and reducing sugars may be used as a binder through the Maillard reaction.

US Patent No. 4,524,164 discloses heat-curable binders for materials for lignocellulose such as sawdust and application methods of the same. Herein, sugars (such as lactose, maltose, glucose, galactose, sucrose, amylose, amylopectin, dextrin, molasses and milk serum) comprising reducing sugars, curing agents such as urea and ammonium salt are reacted in aqueous solution phase for 30 minutes to 18 hours at 50-200 °C in the presence of metal catalysts. Then, organic acid anhydride and lignocellulose materials such as sawdust are added to the reaction mixture, and the mixture is processed at a high temperature. The reducing sugars and urea, ammonium salt and organic acid anhydride may form Melanoidins at a high temperature.

French Patent No. 2,924,719 discloses that rock wool or glass wool may be manufactured into an insulator using aqueous binder composition consisting of monosaccharide, polysaccharide (such as dextrin or molasses), polycarboxylic acid and catalyst. The above binder compositions may also form Melanoidins at a high temperature and bind fibers.

EP2730631 describes binder compositions including a carbohydrate and a soy protein as essential components, and a nitrogen-containing compound as a crosslinking agent.

EP0284186 describes aqueous compositions for producing a distinctive colour in food. These compositions do not comprise an aldehyde as an original component.

US 2011/263757 describes thermosetting aqueous binder compositions comprising reducing sugars and amino acids.

EP2395035 describes thermosetting aqueous binder compositions comprising cyclic enamine compounds (or oligomer) formed for example by adding glutaraldehyde to a mixture of ammonia. These binder compositions do not use the glutaraldehyde as it is.

The invention is set out in the appended set of claims 1-8.

As stated earlier, the present invention is as claimed in claims 1-8. It uses Melanoidins, formed by Maillard reaction between the reducing sugars and the amino acids at a high temperature well known in this field of technology.

It uses the aldehyde compound with 1% or less of minimum inhibitory concentration (MIC) in order to recycle process water comprising binder component formed during the manufacturing process by fostering preservative ability and to enhance the performance of Melanoidin binders.

The aldehyde compounds according to claims 1-5 with 1% or less of microorganism minimum inhibitory concentration (MIC) are selected from the group comprising glutaraldehyde, formaldehyde, glyoxal and combinations thereof. They may have been selected by the method below.

5% aqueous solution is prepared by using reducing sugars and amino acids used in the present invention in the weight ratio of 1/1, and decayed for 1 week by leaving it at room temperature. The contaminated strain from the decayed sample is used as the test strain. Each of the aldehyde diluted solutions for selection is vaccinated by the test strain, incubated in a 35°C incubator, and the proliferation and death of the microorganisms is observed wherein the aldehyde compound with 1% or less of MIC is selected.

The aldehyde compounds with 1% or less of MIC used in the present invention according to claims 1-5 may affect the cell wall or cytoplasm of the microorganisms, disturbing their roles or chemically reacting with a characteristic group such as thiol, amino groups or mercapto groups, destroying the microorganisms which lead to inhibition of proliferation or death.

On the other hand, in addition to the role of providing the aqueous binder composition with preservative ability, the above aldehyde compound may form cross-linked network of polymers by bonding with the amino groups of amino acid, curing at a high temperature.

Therefore, the aqueous binder composition of the present invention may comprise toxic aldehyde compound (for example, formaldehyde) before being applied on the fiberized mineral and curing at high temperature in the oven, but the final insulator obtained after the curing at a high temperature does not actually comprise toxic aldehyde compound which is formed in case of insufficient reaction or decomposing when curing reaction.

In other words, the insulator prepared by using the aqueous binder composition of the present invention has the released amount of formaldehyde in range of 0-0.005mg/m³·hr, which is zero or almost zeroised, measured by the small chamber method (KSMISO16000 and KSM1998).

Moreover, aldehyde compounds used in the present invention are selected from the group comprising glutaraldehyde, formaldehyde, glyoxal and combinations thereof. They have the advantage of not inducing corrosion of the metal or not remaining halogen elements or compounds like phenol, unlike other preservative agents.

The binder composition of the present invention comprises one or more reducing sugars with carbon number of 3 or higher. The reducing sugar of the present invention refers to aldose or ketose saccharides which may have aldehyde or aldehyde structure by isomerization. Specifically, monosaccharide or disaccharide such as glucose, maltose, fructose, galactose, cellobiose, gentiobiose, rutinose and glyceraldehyde may be used individually or combined, but the reducing sugar is not limited thereto.

The amount of reducing sugars comprised in the binder composition of the present invention is 40-95 parts by weight, or more preferably 60-90 parts by weight, or even more preferably 70-90 parts by weight based on a total of 100 parts by weight of reducing sugars and amino acids. If the content of reducing sugars in the binder composition is less than 40 parts by weight based on a total of 100 parts by weight of reducing sugars and amino acids, the hardness of the cured product formed by the binder composition may decline, and if the content of reducing sugars are more than 95 parts by weight, the stability and cross-linking density of the cured product may decline.

The binder composition of the present invention comprises one or more amino acids. According to the present invention, amino acid is a compound having one or more amino groups and one or more carboxyl groups-specifically, glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline and glutamine may be used individually or combined, but the amino acid is not limited thereto.

The amount of amino acids comprised in the binder composition of the present invention is 5-60 parts by weight, or more preferably 10-40 parts by weight, or even more preferably 10-30 parts by weight based on total 100 parts by weight of reducing sugars and amino acids. If the content of amino acids in the binder composition is less than 5 parts by weight based on total 100 parts by weight of reducing sugars and amino acids, the stability and cross-linking density of the cured product may decline, and if the content is more than 60 parts by weight, the hardness of the cured product formed by binder composition may decline.

According to one embodiment of the present invention, in order to increase the solubility of amino acids to water, amino acids wherein a part or the entire (for example, amino groups included in amino acids are 20-100% equivalent, preferably 30-100% equivalent) amino groups are neutralized by acid is preferably used. The examples of acids used to neutralize amino acids are sulfuric acid, phosphoric acid, carboxylic acid, organic sulfonic acid, and any forms of acid compounds-such as unimolecular, dimer, trimer, oligomer, or polymer-may be used. In certain cases, the amino acids may be neutralized by amine compounds or ammonia. Preferably, acid compound wherein the boiling point is higher than 300°C (for example, 300-500°C) under a room temperature and under a normal pressure condition (25°C, 1 atm) may be used.

The binder composition of the present invention comprises one or more aldehyde compounds with 1% or less of MIC selected from the group comprising glutaraldehyde, formaldehyde, glyoxal and combinations thereof. As the aldehyde compounds with 1% or less of MIC in the present invention, glutaraldehyde, formaldehyde or glyoxal are used individually or combined.

The amount of aldehyde compound with 1% or less of MIC comprised in the binder composition of the present invention is based on a total of 100 parts by weight of reducing sugars and amino acids, 0.1-5 parts by weight. If the content of aldehyde compound comprised in the binder composition is based on a total of 100 parts by weight of reducing sugars and amino acids, less than 0.01 parts by weight, process water comprising binder component may easily be spoiled by putrefaction and induce odor due to insufficient preservative ability, and if the content is more than 10 parts by weight, the film of cured product may be easily broken due to over-curing.

The reducing sugars and amino acids which are the components of the present invention is obtained by hydrolysis or fermentation process from starch or molasses obtained from plant. Therefore, depletion of the resources would not be a problem and the amount of carbon dioxide formed during manufacturing or discarding the product may be minimized. Furthermore, the final product comprises almost no toxic materials such as phenol and formaldehyde. (This means that in the case of formaldehyde when the released amount is measured by the small chamber method, it is in the range of 0-0.005mg/m³·hr, value zero or almost zeroised.)

Preferably, the binder composition of the present invention may additionally comprise acid compound with a boiling point of 300°C or higher (for example, 300-500°C) in room temperature and normal pressure (in other words, 25°C, 1 atm) condition. These acid compounds with a boiling point may increase water solubility of amino acids and may be used to increase the speed of curing reaction during the baking process after being sprayed on the fibrous assembly at a high temperature. In order to inhibit volatilization during curing reaction at a high temperature, it is preferable that the acid compound has a boiling point higher than 300°C at a condition of room temperature and normal pressure. The acid compounds with a boiling point of 300°C or higher are selected among sulfuric acid, phosphoric acid, carboxylic acid, organic sulfonic acid.

In a case wherein the binder composition of the present invention comprises an acid compound with a boiling point, the amount of the acid compound is, based on a total of 100 parts by weight of reducing sugars and amino acids, preferably 0.1-10 parts by weight, more preferably 0.1-5 parts by weight, even more preferably 0.1-3 parts by weight. If the content of the acid compound in the binder composition is less than 0.1 parts by weight based on a total of 100 parts by weight of reducing sugars and amino acids, sufficient curing may not occur which leads to inferior physical properties of the cured product, and if the content is more than 10 parts by weight, cured products formed may be fragile.

The binder composition of the present invention may selectively further comprise one or more additives when necessary in the scope of the present invention to achieve the purpose. As useful additives, water repellents to increase the water resistance of fibrous assembly, antirust additive to inhibit the rusting of facilities, dust oil to decrease the formation of dust in products, buffer to control the pH, coupling additive to enhance the adhesion, or curing agent for the enhancement of mechanical properties may be used. However, the additives are not limited thereto, and any additive widely used in this field may be used as well. There are no particular limitations on additional additives, based on a total of 100 parts by weight of reducing sugars and amino acids, and each additive may be used in a range of 0.1-10 parts by weight, but it is not limited thereto.

Moreover, according to the present invention, in order to inhibit the putrefaction of process water comprising a small percentage of organic binder component formed during the manufacturing process, the binder composition may further comprise a preservative agent. These preservative agents may be input to a mixing tank during binder manufacturing, or be input to any facilities such as a process water collecting tank, transferring pipe, water treatment facilities, and may be used regardless of its type as long as it is used in the general field. The amount of preservative agent may be in a range of preferably 500-5,000 ppm, or more preferably 1,000-3,000 ppm depending on the weight of the process water formed. In some cases, in order to kill microorganisms, the mixing tank may be heated for a certain time or more at normal pressure, and temperature in the range of 55-100°C. Death of microorganism or concentration of microorganism may easily be detected by the diagnosing kit generally used in the field and microorganism incubating facilities.

The binder composition of the present invention may control the solid content as 2-50% by weight, preferably 5-20% by weight (in other words, based on the whole 100% by weight of the composition, the content of water is 50-98% by weight, preferably 80-95% by weight) by using diluents such as water (industrial water, underground water, waste water etc.) to evenly apply the above components on the fibrous materials. When there is too much water as a diluent, excessive energy may be consumed by volatile water, but when there is too little water, the binder composition may be not applied well on the fibrous materials, and therefore binder content in the final product is unnecessarily high which is not desirable.

When the binder composition of the present invention is heat-treated-for example, at a temperature of 120°C or higher-various curing reactions-such as Maillard reaction which occurs at amadori intermediate between aldehyde group of reducing sugars and amine group of amino acids, amide reaction between carboxylic acid group and amine group of the amino acids, ester reaction between hydroxyl group of reducing sugars and carboxylic acid group of amino acids, coordinate bond between metal ion and nitrogen, oxygen, sulfur, and halogen elements at reducing sugars or amino acids compound-can occur, and as a result water-insoluble polymer is formed, which makes it a useful binder with highly outstanding physical properties such as water resistance.

Therefore, another aspect of the present invention provides method for binding fibrous materials as claimed in claim 6 comprising spraying aqueous heat-curable binder composition composition, and fibrous materials bound by the aqueous heat-curable binder composition of the present invention.

According to the method for binding fibrous materials of the present invention, the aqueous heat-curable binder composition is sprayed as uncured aqueous solution or water dispersion on the fibrous materials. Examples of the fibrous materials may be mineral fiber (for example, rock wool, glass wool and ceramic fiber) or mono fiber assembly obtained from natural and synthetic resin, but is not limited thereto.

Moreover, the fibrous material assembly wherein a binder composition is applied is heat cured through heat treatment. The heat-treatment temperature for curing is appropriate at 120°C or higher (for example, 120-300°C, preferably 150-250°C). If the heat treatment temperature is too low, insufficient curing occurs, but if the temperature is too high, over-curing occurs which might lead to generation of dust.

The content of cured binder in fibrous materials prepared by the present invention may be based on 100 parts by weight of bound fibrous materials-for example, 2 to 15% by weight.

Hereinafter, the present invention will be described in more detail with reference to the following examples, but the scope of the present invention should not be construed to be limited thereby in any manner.

### [Examples]

### Example 1

370kg of glucose (D-glucose) (solid content: 91% by weight), 70kg of glutamine (solid content: 98% by weight), 2.5kg of ammonium sulfate (solid content: 98% by weight), 1.5kg of formaldehyde (Formalin, UNID Co., Ltd.) (solid content: 37% by weight), 3kg of dust oil (Govi-Garo217S), 2kg of silicone water repellent (silicone-based water repellent) (KCC-SI1460Z) and 4050kg of distilled water were put into the mixing vessel, stirring it for 30 minutes with an agitator, calibrated to pH 8-9 by ammonia water, and binder composition was prepared after stirring the vessel for an additional 10 minutes. The solid content of the obtained binder composition was 9% by weight.

### Example 2

370kg of glucose (D-glucose) (solid content: 91% by weight), 70kg of glutamine (solid content: 98% by weight), 2.5kg of ammonium sulfate (solid content: 98% by weight) and 660kg of distilled water were put into the reactor wherein a jacket was equipped which was capable of regulating temperature externally by steam and cooling water, heated to 85°C, and the temperature of the reactant was maintained for 3 hours. Then, 3390kg of distilled water at room temperature, 1.5kg of formaldehyde (Formalin, UNID Co., Ltd) (solid content: 37% by weight), 3kg of dust oil (Govi-Garo217S) and 2kg of silicone water repellent (silicone-based water repellent) (KCC-SI1460Z) were put into the mixing vessel, stirring it for 30 minutes with an agitator, calibrated to pH 8-9 by ammonia water, and binder composition was prepared after stirring the vessel for an additional 10 minutes. The solid content of the obtained binder composition was 9% by weight.

### Example 3

The binder composition was prepared in the same way as Example 1 except that 1.5kg of glyoxal solution (solid content: 40% by weight) was used instead of formaldehyde. The solid content of the obtained binder composition was 9% by weight.

### Example 4

The binder composition was prepared in the same way as Example 1 except that 1.5kg of glutaraldehyde (solid content: 50% by weight) was used instead of formaldehyde. The solid content of the obtained binder composition was 9% by weight.

### Comparative Example 1: Preparing binder by using phenol/formaldehyde resin

404kg of phenol/formaldehyde resin (manufactured by KCC), 3800kg of distilled water, 2kg of water repellent (KCC-SI1460Z) and 3kg of dust oil (Garo217S) were put into the mixing vessel, and binder composition was prepared by stirring it for 30 minutes with an agitator. The solid content of the obtained binder composition was 9% by weight.

Comparative Example 2: Preparing binder by using polycarboxylic acid (Example 1 of Korean Laid-open Patent Publication No.2008-0049012)

158kg of glucose (D-glucose) (solid content: 91% by weight), 44kg of citric acid (solid content: 98% by weight), 50kg of ammonia water (25%), 3750kg of distilled water, 2kg of water repellent (SI1460Z-KCC) and 3kg of dust oil were put into the mixing vessel, and binder composition was prepared by stirring it for 30 minutes with an agitator. The solid content of the obtained binder composition was approximately 4.5% by weight.

### Comparative Example 3: Preparing reducing sugar/amino acid binder which does not contain aldehyde compound with 1% or less of MIC

370kg of glucose (D-glucose) (solid content: 91% by weight), 67kg of glutamine (solid content: 98% by weight), 2.5kg of ammonium sulfate (solid content: 98% by weight), 3kg of dust oil (Govi-Garo217S), 2kg of silicone water repellent (silicone-based water repellent) (KCC-SI1460Z) and 4050kg of distilled water were put into the mixing vessel, and binder composition was prepared by stirring it for 30 minutes with an agitator. The solid content of the obtained binder composition was 9% by weight.

### Experimental Example: Binding fibrous materials using binders

Melted glass of high temperature was fiberized at a rate of 2100 kg/hr by passing through a spinner, and each binder, prepared in the above Examples 1 to 4 and Comparative Examples 1 to 3 was respectively sprayed at the rate of 47L/min on the glass fiber which came to the collecting vessel. After the drying process, glass wool insulator was obtained. In case of the binder of Comparative Example 3, the binder solution was filtered by 150 mesh stainless filter before spraying since calcium hydroxide was precipitated, and the rest of the processes were conducted in the same way as other experimental examples.

The below tests were done to each of the glass wools prepared.

### Water Resistance

The glass wool sample of 100mm (width)×100mm (height)×50mm (thickness) was prepared, and water resistance was tested for the standardized 48 hours. The sample was floated in pure water in the beaker, and the time consumed for the sample to completely sink down was measured. The poorer the water resistance, the closer it was graded to 0, and the more it was outstanding, the closer it was graded to 5. In the cases of Examples 1, 2, 3 and 4, and Comparative Examples 1 and 2, each sample stayed afloat for more than 72 hours, but in the case of Comparative Example 3, the sample sunk in less than 24 hours. The test results are shown in Table 1.

### Immersion

A glass wool sample of 100mm (width)×100mm (height)×50mm (thickness) was prepared, and immersion was tested for the standardized 72 hours. The sample was fully immersed in a 2L beaker completely filled with pure water, and the change in the color was measured. The change in the color was numerically digitized by the color change, depending on the concentration. The poorer the submersion, the closer it was graded to 0, and the more it was outstanding, the closer it was graded to 5. In the cases of Examples 1 to 4, each sample did not show much color change for more than 72 hours, but in the case of Comparative Example 3, the sample showed serious color change in only a few hours. The test results are shown in Table 1.

### Amount of Formaldehyde Released

By the small chamber method, a specimen was put into a small chamber, and the air inside the chamber was collected after 7 days. The collected air was examined by HPLC (High Performance Liquid Chromatography). More detailed method follows the method set by the Korea Air Cleaning Association, and the results were analyzed on the 7^{th} day. The test results are shown in Table 1.

### Tensile Strength

All 3 of the measuring samples were prepared in a size of 4cm. The draw bar was placed shorter than the length of the sample, and the sample was fixed on the draw bar perpendicularly, making the sample perpendicular to the rod. The speed of the tensile strength tester was 15mm/min, and the scale was set to zero in the rod display. The tester was then operated. The maximum load displayed after the tester automatically stopped was measured, and the average value was calculated. The test results are shown in Table 1.

### Dust Rate

Four measuring samples were prepared, each of them was 1.5cm wide and 10cm long. The sample was weighed before measuring, placed on the rust rate measuring meter, and the sample was shaken in every direction at a rate of 1m/min. The total measuring time was 10 minutes for each sample, and when the tester was automatically stopped, the sample was weighed. The dust rate was represented in % and calculated by the following formula: dust rate = [(weight after measurement / weight before measurement) - 1] ×100. In tests of glass wool prepared by using each of the binders of Examples 1 to 4, less dust was found compared to the cases wherein the binders of the Comparative Examples were used. The test results are shown in Table 1.

### Restoration Rate

A glass wool sample of 10m (width)×1m (height)×0.05m (thickness) was prepared and kept at room temperature in a rolled form for 8 weeks. After 8 weeks, the change of thickness of the sample was examined after being unrolled. The test results are shown in Table 1 below.

### Mold Resistance

The mold resistance was measured by the ASTM G21-09 test method, and the mold growth rate of the specimen was measured after a one-month observation. The results are shown in Table 1 below.

### Preservative Ability of the Process Water

Process water samples wherein use binders of Examples and Comparative Examples were prepared by diluting each aqueous binder using the facility cleaning water to control solid content to 2 to 3% by weight. In order to determine the preservative ability of the process water samples, challenge tests against mixed bacteria were conducted.

The strains of bacteria, Bacillus subtilia (ATCC6633) and Staphylococcus aureus (ATCC6538) were used as Gramm positive bacillus, and Escherichia coli (ATCC9637), (Pseudomonas aeruginosa ATCC 9027) were used as Gramm negative bacillus. In pre-cultivation, the above 4 kinds of bacteria were vaccinated to Nutrient Agar, and incubated for 24 hours at 33-37°C. Then, saline solution was mixed to adjust bacterial concentration to 1×10⁶⁻⁷ cfu/g (cfu: colony forming unit), and mixed strain solution was prepared.

For 100g of each process water sample of the Examples and Comparative Examples, the above mixed strain solution was vaccinated. Then, 1g of each sample was collected and diluted by 9g of the buffer saline (PBS buffer) solution to obtain serial dilution.

100µl of the above diluted solutions was inoculated in the agar medium and was spread evenly by sterilized rod. Then, the medium was flipped upside down, and incubated for 48 hours at 33-37°C and counted.

The decisions were made with gradations in 5 steps of sections. When the bacteria were all dead, it was graded 0, and in case of heavy contamination, severe concentration of 1×10⁶⁻⁷cfu/g was graded 4. (0: No bacterial recovery, 1: Trace of contamination, 2: Light contamination, 3: Moderate contamination, 4: Heavy contamination). In order for process water to have preservative ability, preferably, more than 99.9% of number of bacteria should be decreased in a week after the vaccination and should not proliferate during the test period. The results are shown in the process water preservative column in Table 1.

**[Table 1]**

| | Examples | | | | Comparative Examples | | | |
|---|---|---|---|---|---|---|---|---|
| | 1 | 2 | 3 | 4 | 1 | 2 | 3 | |
| Water Resistance | 5 | 5 | 4 | 4 | 5 | 4 | 2 | |
| Immersion | 5 | 5 | 5 | 5 | 4 | 4 | 3 | |
| Released amount of Formaldehyde (mg/m³·hr) | 0 | 0.001 | 0 | 0 | 0.035 | 0 | 0 | |
| Tensile Strength (kgf/cm²) | | 0.27 | 0.29 | 0.24 | 0.23 | 0.25 | 0.2 | 0.15 |
| Dust Rate (%) | | 0.6 | 0.6 | 0.7 | 0.7 | 1 | 1.8 | 2.3 |
| Restoration Rate (%) | | 100% or more | 100% or more | 100% or more | 100% or more | 100% or more | 100% or more | 100% or more |
| Mold Resistance | | Good | Good | Good | Good | Good | Good | Good |
| Preservati ve ability of the process water | 3 days | 2 | 1 | 3 | 2 | 1 | 4 | 4 |
| | 1 week | 1 | 0 | 1 | 1 | 0 | 4 | 4 |
| | 2 weeks | 0 | 0 | 0 | 0 | 0 | 4 | 4 |
| | 3 weeks | 0 | 0 | 0 | 0 | 0 | 4 | 4 |
| | 4 weeks | 0 | 0 | 0 | 0 | 0 | 4 | 4 |

## Claims

1. An aqueous heat-curable binder composition comprising:
one or more reducing sugars, one or more amino acids, and
one or more aldehyde compounds selected from the group consisting of glutaraldehyde, formaldehyde, glyoxal and combinations thereof,
wherein the amount of reducing sugars is 40-95 parts by weight based on a total of 100 parts by weight of the reducing sugars and amino acids,
wherein the amount of amino acids is 5-60 parts by weight, based on a total of 100 parts by weight of the reducing sugars and amino acids, and
wherein the amount of the aldehyde compounds is 0.1-5 parts by weight based on the total of 100 parts by weight of the reducing sugars and amino acids.

2. The aqueous heat-curable binder composition according to claim 1, wherein the reducing sugars are selected from the group consisting of glucose, maltose, fructose, lactose, cellobiose, gentiobiose, rutinose and combinations thereof.

3. The aqueous heat-curable binder composition according to claim 1, wherein the amino acids are selected from the group consisting of glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline, glutamine and combinations thereof.

4. The aqueous heat-curable binder composition according to claim 1, wherein the amino group of the amino acids are partially or entirely neutralized by acid.

5. The aqueous heat-curable binder composition according to claim 1 further comprising acid compounds selected from the group consisting of sulfuric acid, phosphoric acid, carboxylic acid, organic sulfonic acid.

6. The method for binding a fibrous material made of mineral fiber or fibers obtained from natural and synthetic resin comprising:
spraying the aqueous heat-curable binder composition according to any of claims 1 to 5 on a fibrous material; and
heat-curing of the binder composition sprayed on the fibrous material.

7. A fibrous material made of mineral fiber or fibers obtained from natural and synthetic resin comprising the aqueous heat-curable binder composition according to any of claims 1 to 5.

8. The fibrous material a made of mineral fiber or fibers obtained from natural and synthetic resin according to claim 7, wherein a release amount of the formaldehyde is 0-0.005mg/m³·hr.

## Patentansprüche

1. Eine wässrige, wärmehärtende Bindemittelzusammensetzung, die umfasst:
einen oder mehrere reduzierende Zucker, eine oder mehrere Aminosäuren, und
eine oder mehrere Aldehydverbindungen, ausgewählt aus der Gruppe bestehend aus Glutaraldehyd, Formaldehyd, Glyoxal und Kombinationen daraus,
wobei die Menge der reduzierenden Zucker 40-95 Gewichtsteile, bezogen auf 100 Gewichtsteile der Summe der reduzierenden Zucker und Aminosäuren beträgt,
wobei die Menge der Aminosäuren 5-60 Gewichtsteile, bezogen auf 100 Gewichtsteile der Summe der reduzierenden Zucker und Aminosäuren beträgt, und
wobei die Menge der Aldehydverbindungen 0,1-5 Gewichtsteile, bezogen auf 100 Gewichtsteile der Summe der reduzierenden Zucker und Aminosäuren beträgt.

2. Wässrige, wärmehärtende Bindemittelzusammensetzung nach Anspruch 1, wobei die reduzierenden Zucker ausgewählt werden aus der Gruppe bestehend aus Glucose, Maltose, Fruktose, Laktose, Cellobiose, Gentiobiose, Rutinose, und Kombinationen daraus.

3. Wässrige, wärmehärtende Bindemittelzusammensetzung nach Anspruch 1, wobei die Aminosäuren ausgewählt werden aus der Gruppe bestehend aus Glycin, Alanin, Valin, Leucin, Isoleucin, Threonin, Serin, Cystein, Methionin, Asparaginsäure, Asparagin, Glutaminsäure, Dijodotyrosin, Lysin, Arginin, Histidin, Phenylalanin, Tyrosin, Tryptophan, Prolin, Oxyprolin, Glutamin, und Kombinationen daraus.

4. Wässrige, wärmehärtende Bindemittelzusammensetzung nach Anspruch 1, wobei die Aminogruppen der Aminosäuren ganz oder teilweise durch Säure neutralisiert werden.

5. Wässrige, wärmehärtende Bindemittelzusammensetzung nach Anspruch 1, wobei die Aminosäuren ausgewählt werden aus der Gruppe bestehend aus Schwefelsäure, Phosphorsäure, Carboxylsäure, organische Sulfonsäure.

6. Das Verfahren zur Bindung von fasrigem Material, bestehend aus Mineralfasern oder Fasern aus natürlichem und synthetischem Harz, umfassend:
Aufsprühen der wässrigen, wärmehärtenden Bindemittelzusammensetzung gemäß irgendeinem der Ansprüche 1 bis 5 auf ein Fasermaterial; und
Wärmehärten der auf das Fasermaterial gesprühten Bindemittelzusammensetzung.

7. Ein Fasermaterial aus Mineralfasern oder Fasern aus aus natürlichem und synthetischem Harz, umfassend die wässrige, wärmehärtende Bindemittelzusammensetzung gemäß irgendeinem der Ansprüche 1 bis 5.

8. Das Fasermaterial aus Mineralfasern oder Fasern aus natürlichem und synthetischem Harz, gemäß Anspruch 7, wobei eine Freisetzungsmenge des Formaldehyds 0- 0.005mg/m³·hr beträgt.

## Revendications

1. Composition aqueuse de liant thermodurcissable comprenant :
un ou plus sucres réducteurs, un ou plus acides aminés, et
un ou plus composés aldéhyde choisis dans le groupe constitué par le glutaraldéhyde, le formaldéhyde, le glyoxal et des combinaisons de ceux-ci,
dans lequel la quantité de sucres réducteurs est de 40 à 95 parties en poids sur la base d'un total de 100 parties en poids des sucres réducteurs et des acides aminés,
dans lequel la quantité d'acides aminés est de 5 à 60 parties en poids, sur la base d'un total de 100 parties en poids des sucres réducteurs et des acides aminés, et
dans lequel la quantité des composés aldéhyde est de 0,1 à 5 parties en poids sur la base du total de 100 parties en poids des sucres réducteurs et des acides aminés.

2. Composition aqueuse de liant thermodurcissable selon la revendication 1, dans laquelle les sucres réducteurs sont choisis dans le groupe constitué du glucose, du maltose, du fructose, du lactose, du cellobiose, du gentiobiose, du rutinose et de combinaisons de ceux-ci.

3. Composition aqueuse de liant thermodurcissable selon la revendication 1, dans laquelle les acides aminés sont choisis dans le groupe constitué de la glycine, l'alanine, la valine, la leucine, l'isoleucine, la thréonine, la sérine, la cystéine, la méthionine, l'acide aspartique, l'asparagine, l'acide glutamique, la diiodotyrosine, la lysine, l'arginine, l'histidine, la phénylalanine, la tyrosine, le tryptophane, la proline, l'oxyproline, la glutamine et de combinaisons de ceux-ci.

4. Composition aqueuse de liant thermodurcissable selon la revendication 1, dans laquelle le groupe amino des acides aminés est partiellement ou entièrement neutralisé par acide.

5. Composition aqueuse de liant thermodurcissable selon la revendication 1, comprenant en outre des composés acides choisis dans le groupe constitué de l'acide sulfurique, l'acide phosphorique, l'acide carboxylique, et l'acide sulfonique organique.

6. Procédé pour lier un matériau fibreux constitué de fibres minérales ou de fibres obtenues à partir de résine naturelle et synthétique, comprenant :
pulvériser la composition aqueuse de liant thermodurcissable selon l'une des revendications 1 à 5 sur un matériau fibreux ; et
thermodurcir la composition de liant pulvérisée sur la matière fibreuse.

7. Matière fibreuse constituée de fibres minérales ou de fibres obtenues à partir de résine naturelle et synthétique comprenant la composition aqueuse de liant thermodurcissable selon l'une des revendications 1 à 5.

8. Matière fibreuse constituée de fibres minérales ou de fibres obtenues à partir de résine naturelle et synthétique selon la revendication 7, dans laquelle une quantité de libération du formaldéhyde est de 0 à 0,005 mg/m³·hr.
